# EUROPÄISCHE PATENTSCHRIFT

(11) **EP 3 253 960 B1**
(45) Veröffentlichungstag und Bekanntmachung des Hinweises auf die Patenterteilung: **13.03.2019**
(21) Anmeldenummer: 16701669.0
(22) Anmeldetag: 28.01.2016
(51) Int. Cl.: F02F 7/00, F04B 39/12, B22D 17/20

(54) **GEHÄUSE FÜR EINEN MOTOR ODER KOMPRESSOR**
HOUSING FOR A MOTOR OR COMPRESSOR
CARTER DE MOTEUR OU DE COMPRESSEUR

(30) Priorität: 02.02.2015 DE 102015101459
(43) Veröffentlichungstag der Anmeldung: 13.12.2017
(73) Patentinhaber: KNORR-BREMSE Systeme für Nutzfahrzeuge GmbH, 80809 München (DE)
(72) Erfinder: HERBIET, Olivier, 14290 La Chapelle-Yvon (FR)
(86) Internationale Anmeldenummer: PCT/EP2016/051739
(87) Internationale Veröffentlichungsnummer: WO 2016/124466

(56) Entgegenhaltungen:
- DE-T2- 69 822 764
- FR-A- 461 594
- FR-A- 1 191 087

## Beschreibung

Die Erfindung betrifft ein kosteneffizient zu fertigendes Gehäuse für einen Motor oder Kompressor, einen Motor oder Kompressor mit diesem Gehäuse sowie ein Herstellungsverfahren.

### Stand der Technik

Zur Versorgung der Luftbremsanlagen von Lastwagen und Bussen mit Druckluft kommen in der Regel Kompressoren mit ein bis zwei Kolben zum Einsatz. Über eine Antriebsquelle wird eine Kurbelwelle in Drehung versetzt. Pleuelstangen sind sowohl an der Kurbelwelle als auch an den Kolben drehbar gelagert. Die Drehbewegung der Kurbelwelle wird durch die Pleuelstangen in eine Auf- und Ab-Bewegung der Kolben in ihren Zylindern umgewandelt. Durch diese Auf- und Abwärts-Bewegung wird die Luft verdichtet. Die Gehäuse derartiger Kompressoren werden in der Regel einstückig aus Gusseisen in einer Sandform oder Kokille gegossen. Als Alternative ist bekannt, einstückig in eine Sandform gegossene Graugusszylinder auf ein Grundgehäuse aus Aluminium zu montieren, das durch Hochdruckguss hergestellt wurde.

Bei Kompressoren mit zwei oder mehr Zylindern ist die Herstellung des großen Kurbelraums, in dem sich im Betrieb die Kurbelwelle bewegt, mit dem Hochdruckgussverfahren sehr schwierig. Daher wird der Teil des Gehäuses, der den Kurbelraum enthält, häufig zweistückig gefertigt. Dies macht nach dem Guss eine aufwendige Montage erforderlich und schafft Verbindungstellen zwischen den Gehäuseteilen, die prinzipiell anfällig für Leckagen sind.

Die DE 698 22 764 T2 offenbart einen Zylinderblock für eine Brennkraftmaschine, welcher als ein Gehäuse für einen Motor anzusehen ist. Das Gehäuse besteht im Wesentlichen aus einem länglichen Kurbelraum, der mit mehreren Zylinderräumen zur Aufnahme von je zugeordneten Kolben in Verbindung steht. Der längliche Kurbelraum besitzt zwei stirnseitige Endflächen, wovon eine der beiden Endflächen eine Öffnung aufweist. Der diese stirnseitige Öffnung aufweisende Kurbelraum ist glockenförmig. Quer durch den Kurbelraum verlaufen mehrere Stege, welche von Zylinder zu Zylinder beabstandete Lagerstellen für eine Kurbelwelle dienen. Zur gießtechnischen Herstellung eines solchen Gehäuses sind mehrere Formkerne erforderlich.

### Aufgabe und Lösung

Es ist daher die Aufgabe der Erfindung, ein Gehäuse für einen Motor oder Kompressor zur Verfügung zu stellen, das in einfacherer Weise einstückig zu fertigen ist, so dass es einfacher zu montieren ist und gleichzeitig weniger anfällig für Lecks ist als die mehrstückig gefertigten Gehäuse nach dem Stand der Technik.

Diese Aufgabe wird erfindungsgemäß gelöst durch ein Gehäuse gemäß Hauptanspruch, einen Motor oder Kompressor gemäß Nebenanspruch sowie durch ein Herstellungsverfahren gemäß weiterem Nebenanspruch. Weitere vorteilhafte Ausgestaltungen ergeben sich aus den darauf rückbezogenen Unteransprüchen.

### Gegenstand der Erfindung

Im Rahmen der Erfindung wurde ein Gehäuse für einen Motor oder Kompressor entwickelt. Dieses Gehäuse weist einen länglichen Kurbelraum auf, der zwei Endflächen aufweist. Unter länglich wird verstanden, dass der Kurbelraum sich entlang einer Achse erstreckt und entlang dieser Achse eine größere Ausdehnung aufweist als senkrecht zu diese Achse. Der Kurbelraum dient zur Aufnahme einer Kurbelwelle.

Weiterhin ist mindestens ein Zylinderraum vorgesehen, in dem ein Kolben durch eine Drehung der Kurbelwelle zu einer Hin- und Her-Bewegung angeregt wird.

Der Kurbelraum weist in einer ersten Endfläche eine Öffnung auf, durch die die Kurbelwelle in ihn einführbar ist. Erfindungsgemäß verjüngt sich der
Innendurchmesser des Kurbelraums von der ersten Endfläche zur zweiten Endfläche monoton.
Unter einer monotonen Verjüngung wird verstanden, dass der Innendurchmesser des Kurbelraums auf einem Weg entlang seiner Achse von der ersten Endfläche zur zweiten Endfläche nur abnimmt oder gleichbleibt, jedoch nicht mehr zunimmt.
Es wurde erkannt, dass sich ein derart geformter Kurbelraum durch Umgießen eines Formdorns mit dem Gehäusewerkstoff besonders einfach fertigen lässt. Ein derartiger Formdorn muss sich von seinem ersten Ende zu seinem zweiten Ende monoton verjüngen, damit er nach dem Umgießen an seinem ersten Ende aus dem Gehäuse herausgezogen werden kann. Kurbelräume nach dem bisherigen Stand der Technik, die die Form eines geraden Zylinders oder viele Hinterschnitte hatten, ließen sich mit diesem einfachen Verfahren nicht fertigen. Durch die erfindungsgemäße Formgebung des Kurbelraums kann das Gehäuse einstückig und gleichzeitig sehr kompakt gebaut werden.
Dabei wurde zunächst der Nachteil in Kauf genommen, dass bei einem Motor oder Kompressor mit mehreren Zylindern für mindestens eine Pleuelstange eines Zylinders deutlich weniger Bewegungsraum im Kurbelraum zur Verfügung steht und somit in der Regel die Pleuelstange schlanker dimensioniert werden und/oder der Kurbelgehäusebauch nahe dem ersten Ende größer ausfallen muss. Es wurde erkannt, dass dieser Nachteil durch die wesentlich einfachere Fertigung des Gehäuses überkompensiert wird.

Der Kurbelraum läuft von der ersten Endfläche zur zweiten Endfläche in Form eines Kegels oder Kegelstumpfes zu. Dabei ist der Mantel dieses Kegels oder Kegelstumpfes gegen seine Symmetrieachse um einen Winkel zwischen 0,5 und 10 Grad, bevorzugt zwischen 0,5 und 5 Grad und ganz besonders bevorzugt zwischen 1 und 5 Grad, geneigt. Dann ist ein zur Herstellung verwendeter Formdorn nach dem Umgießen am einfachsten zu entfernen. Das Gehäuse ist erfindungsgemäß einstückig gegossen. Es besteht vorteilhaft zumindest teilweise aus Aluminium, Magnesium, Titan, einer Aluminium-, Magnesium- oder Titanlegierung oder einer anderen Leichtbaulegierung, die druckgießbar ist. Das Kurbelgehäuse kann auch von beiden Endflächen aus jeweils zu seinem Inneren hin in Form eines Kegels oder Kegelstumpfes zulaufen, was beispielsweise durch Umgießen zweier Formdorne, die anschließend in entgegengesetzten Richtungen herausgezogen werden, fertigbar ist. Damit kann der Bewegungsraum, der der Pleuelstange in der Nähe der zweiten Endfläche zur Verfügung steht, vergrößert werden. Bei einem Zweizylinder-Kompressor etwa kann so erreicht werden, dass für beide Zylinder identisch dimensionierte Pleuelstangen verwendet werden können.
Der erfindungsgemäße Motor oder Kompressor weist ein erfindungsgemäßes Gehäuse auf. In diesem Gehäuse sind mindestens zwei Zylinderräume zur Aufnahme je eines Kolbens vorgesehen. Der Antrieb der Kolben erfolgt durch eine Kurbelwelle. Dafür ist je Zylinderraum eine Pleuelstange vorgesehen, die mit einem ersten Pleuelauge an der Kurbelwelle und mit einem zweiten Pleuelauge an einem im Zylinderraum verlaufen Kolben jeweils drehbar gelagert ist. Erfindungsgemäß verjüngt sich, im Vergleich zweier entlang der Achse der Kurbelwelle gelagerter Pleuelstangen, mit dem jeweiligen Innendurchmesser des Kurbelraums auch der Außendurchmesser der Pleuelstange im Bereich des ersten Pleuelauges und/oder der Innendurchmesser des ersten Pleuelauges.
Enthält das Gehäuse beispielsweise zwei Zylinder, wird ein erster Zylinder der Öffnung, durch die die Kurbelwelle in den Kurbelraum einführbar ist, näher sein als der zweite Zylinder. Dann steht am Ort der ersten Pleuelstange, wo der Innendurchmesser des Kurbelraums größer ist, mehr Bewegungsraum für die Bewegung des ersten Pleuelauges um die Kurbelwelle zur Verfügung. Am Ort der zweiten Pleuelstange, wo der Innendurchmesser des Kurbelgehäuses kleiner ist, steht um die Kurbelwelle herum dementsprechend weniger Bewegungsraum für die Bewegung des ersten Pleuelauges der zweiten Pleuelstange um die Kurbelwelle zur Verfügung. Die zweite Pleuelstange ist erfindungsgemäß hieran angepasst.

Selbstverständlich ist es möglich, die kleinere Pleuelstange an beiden Zylindern zu verwenden. Jedoch ist eine Pleuelstange naturgemäß mit zunehmender Dicke auch stabiler. Um den Preis eines leicht erhöhten Aufwandes für die Fertigung zweier verschiedener Teile kann die durch die Pleuelstangen übertragbare Leistung somit insgesamt erhöht werden, indem zwei unterschiedlich große Pleuelstangen eingesetzt werden. Die genauen Abmessungen der Pleuelstangen werden anwendungsspezifisch durch die Kraftanforderungen des Kompressor- oder Motorbetriebs bestimmt.

In der Regel wird die Pleuelstange, die entlang der Achse der Kurbelwelle dem Antrieb des Kompressors am nächsten ist, mechanisch stärker belastet. Dies gilt auch für den Hubzapfen, der diese Pleuelstange mit der Kurbelwelle verbindet. Vorteilhaft ist daher der Antrieb an dem Ende der Kurbelwelle angeschlossen, das durch die erste Endfläche hindurchtritt. Dann hat die Pleuelstange, die dem Antrieb am nächsten ist, die größtmögliche Bewegungsfreiheit im Kurbelraum und kann entsprechend stärker dimensioniert sein.

In einer vorteilhaften Ausgestaltung der Erfindung weisen die Kolben identische Durchmesser und/oder identische Hubwege auf. Besonders bevorzugt weisen sie sowohl identische Durchmesser als auch identische Hubwege auf. Dann erfolgt die Luftverdichtung gleichmäßig; die Verjüngung des Kurbelraums wirkt sich auf die dem Kompressor nachgeschaltete Luftversorgungsanlage nicht mehr aus. Vorteilhaft weist der Kompressor zu diesem Zweck nur eine Druckstufe auf.

Vorteilhaft ist ein Flansch auf der ersten Endfläche des Kurbelraums angeordnet. Dieser Flansch kann das Gehäuse an unterschiedlichste Abtriebe, Antriebe und sonstige Hardware im Motorraum eines Fahrzeugs adaptieren, ohne dass an der Gussform für das Gehäuse etwas geändert werden muss. Besonders vorteilhaft ist die Kurbelwelle zur Verbindung mit dem Abtrieb bzw. Antrieb durch den Flansch geführt.

Der Flansch kann alternativ oder in Kombination hierzu noch weitere Funktionen erfüllen. Er kann in einer weiteren vorteilhaften Ausgestaltung der Erfindung zur Befestigung des Motors oder Kompressors im Motorraum eines Fahrzeugs ausgebildet sein. Er kann alternativ oder in Kombination auch zur Befestigung eines weiteren, über die Kurbelwelle angetriebenen Aggregats am Motor oder Kompressor ausgebildet sein. Dieses weitere Aggregat kann beispielsweise eine Lenkhilfspumpe sein.

Die Zylinderräume können vollständig im Gehäuse angeordnet sein. Sie können aber auch im Gehäuse lediglich beginnen und in Zylinder fortgesetzt sein, die als separate Teile auf das Gehäuse montiert werden. Die Zylinderlaufflächen sind Verschleißteile. Sind sie verschlissen, ist es kostengünstiger, lediglich einen separat montierten Zylinder zu ersetzen, als das Gehäuse komplett aufgeben zu müssen. Weiterhin kann auf diese Weise Gewicht eingespart werden. Beispielsweise ist Aluminium als Material für das Gehäuse besonders vorteilhaft, weil es leicht ist. Stahl ist dagegen strapazierfähiger und somit als Zylinderlauffläche besser geeignet. Mit einem Gehäuse aus Aluminium und Zylindern aus Stahl können die spezifischen Vorteile beider Materialien kombiniert werden.

Im Rahmen der Erfindung wurde auch ein Verfahren zur Herstellung eines erfindungsgemäßen Gehäuses entwickelt. Dieses Verfahren zeichnet sich dadurch aus, dass der Kurbelraum durch Umgießen eines länglichen Formdorns, welcher zwei Enden aufweist und dessen Außendurchmesser sich von seinem ersten Ende zu seinem zweiten Ende hin monoton verjüngt, mit dem Gehäusewerkstoff gefertigt wird. Als Gehäusewerkstoff ist insbesondere Aluminium vorteilhaft.

Es wurde erkannt, dass die Herstellung des Kurbelraums besonders kritisch ist, weil er den größten Hohlraum im Gehäuse darstellt. Durch den Formdorn wird diesem Hohlraum Stabilität gegeben, bis das gegossene Material erkaltet und der Hohlraum selbsttragend geworden ist. Auf diese Weise wird die Herstellung eines Gehäuses aus einem Stück drastisch vereinfacht. Vorteilhaft wird der Formdorn nach dem Umgießen an seinem ersten Ende aus dem Gehäuse gezogen. Bei anderen als Druckgussverfahren kann es aber auch sinnvoll sein, ihn zerstörend zu entfernen, beispielsweise durch Zerbrechen oder durch Auflösen mit einem Ätzmittel.

Der Gehäusewerkstoff sollte am Material des Formdorns möglichst wenig haften. Vorteilhaft besteht er daher aus einem anderen Material als dem Gehäusewerkstoff.

Der Formdorn kann insbesondere als Kegel oder Kegelstumpf zulaufen. Vorteilhaft ist der Mantel dieses Kegels oder Kegelstumpfes gegen seine Symmetrieachse um einen Winkel zwischen 5 und 30 Grad, bevorzugt zwischen 5 und 15 Grad, geneigt.

Verjüngt sich der Formdorn wesentlich stärker, wird der Kurbelraum an seinem zweiten Ende möglicherweise zu eng für die Bewegung einer Pleuelstange um die Kurbelwelle. Verjüngt sich der Formdorn wesentlich schwächer, lässt er sich wesentlich schwerer aus dem erkalteten Gehäusewerkstoff herausziehen und bricht bei dem Versuch möglicherweise ab.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1: Zweistückig gefertigtes Kurbelgehäuse nach dem Stand der Technik.
- Figur 2: Zweistückig gefertigtes Kurbelgehäuse nach dem Stand der Technik mit zusätzlichem Flansch für die Verbindung mit der Antriebsquelle.
- Figur 3: Fertigung eines erfindungsgemäßen Gehäuses.
- Figur 4: Vergleich zweier Pleuelstangen, die gemäß einer Ausgestaltung der Erfindung in einem Gehäuse mit zwei Zylindern zum Einsatz kommen.
- Figur 5: Außenansicht eines erfindungsgemäßen Gehäuses mit zusätzlichen Flansch zur Verbindung mit dem Antrieb oder Abtrieb.

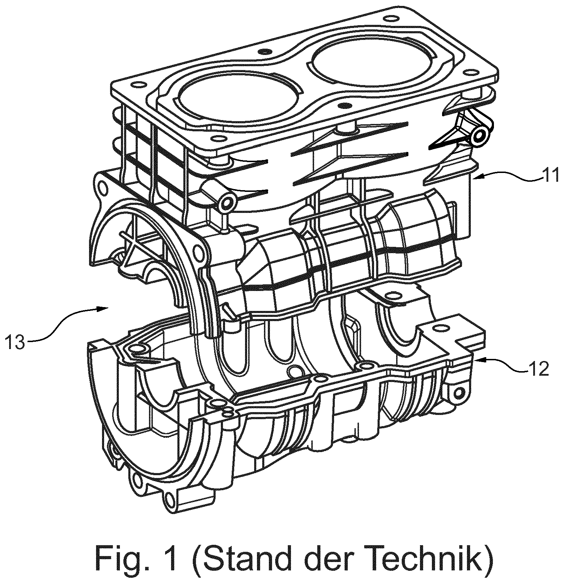

Figur 1 zeigt ein zwei stückig gefertigtes Kompressorgehäuse nach dem Stand der Technik. Es besteht aus dem Gehäuseteilen 11 und 12. Nachteilig ist an seinem Ende 13, durch das die Kurbelwelle eingeführt wird, in der Verbindung zur Antriebsquelle eine T-förmige Dichtung nötig. Diese ist anfällig für Leckagen.

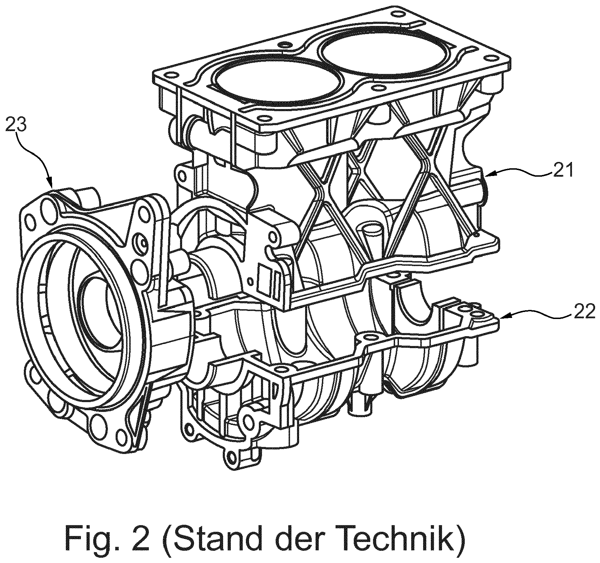

Figur 2 zeigt ein weiteres Kompressorgehäuse nach dem Stand der Technik. Auch dieses Gehäuse ist in zwei Stücken 21 und 22 gefertigt. Für die Verbindung zur Antriebsquelle ist ein zusätzlicher Flansch 23 vorgesehen. Durch diesen Flansch wird die Dichtung der beiden Gehäuseteile 21 und 22 gegeneinander von der Dichtung gegen die Verbindung zur Antriebsquelle entkoppelt. Dadurch wird das Risiko von Leckagen verkleinert. Nachteilig ist immer noch eine aufwendige Montage erforderlich, und die hierfür benötigten Schrauben und Muttern sind dem Benutzer häufig wegen der räumlichen Enge schwer zugänglich.

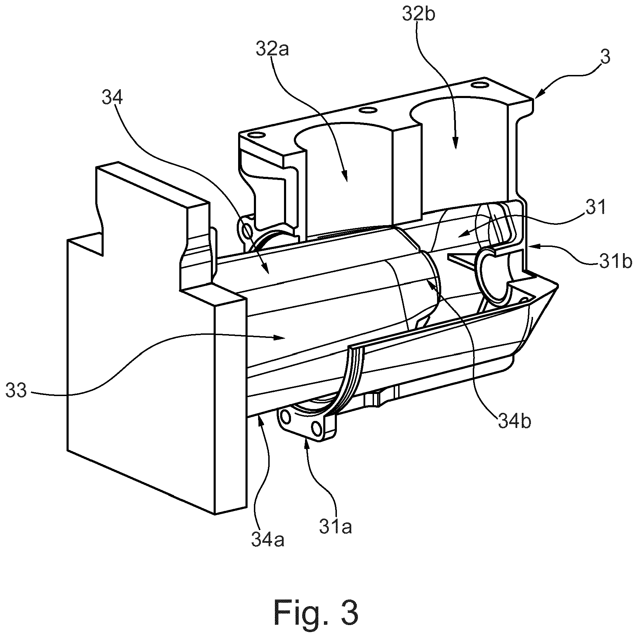

Figur 3 zeigt die Fertigung eines erfindungsgemäßen Gehäuses 3. Dieses Gehäuse weist einen Kurbelraum 31 sowie einen ersten Zylinderraum 32a und einen zweiten Zylinderraum 32b auf. Der Kurbelraum hat zwei Enden 31a und 31b. An seinem Ende 31a weist er eine Öffnung 33 auf, durch die die Kurbelwelle in den Kurbelraum 31 einführbar ist. In dem in Figur 3 dargestellten Zustand befindet sich in dieser Öffnung und in einem Teil des Kurbelraums der Formdorn 34 mit den Enden 34a und 34b. Dieser Formdorn verjüngt sich von seinem Ende 34a zu seinem zweiten Ende 34b. In der in Figur 3 dargestellten Stellung wurde er bereits teilweise aus dem Gehäuse 3 herausgezogen, nachdem das gegossene Material erkaltet war.

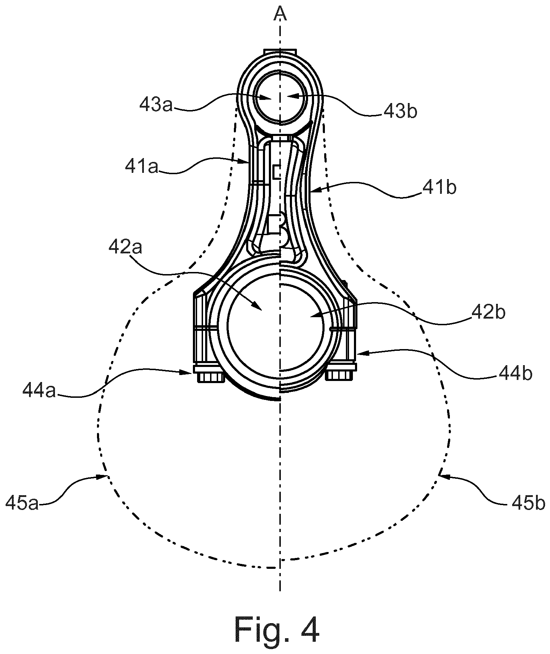

Figur 4 zeigt den Vergleich zweier Pleuelstangen, die in dem in Figur 3 dargestellten Ausführungsbeispiel des Kompressorgehäuses zum Einsatz kommen. Links der Linie A sind die erste Pleuelstange 41a und der von ihr im Kurbelraum benötigte Bewegungsraum 45a eingezeichnet. Rechts der Linie A sind die zweite Pleuelstange 41b und der von ihr im Kurbelraum benötigte Bewegungsraum 45b eingezeichnet. Die zweite Pleuelstange 41b kommt im Zylinderraum 32b zum Einsatz, der weiter von der Öffnung 33 entfernt ist als der erste Zylinderraum 32a. In dem Zylinderraum 32a kommt die erste Pleuelstange 41a zum Einsatz. Hier ist der zur Verfügung stehende Bewegungsraum größer.

Die erste Pleuelstange 41a weist ein erstes Pleuelauge 42a und ein zweites Pleuelauge 43a auf. Mit dem ersten Pleuelauge 42a ist sie drehbar an der Kurbelwelle gelagert, und zwar in einer Drehachse, die gegen die Drehachse der Kurbelwelle versetzt ist. Damit wird sie durch eine Drehung der Kurbelwelle zu einer Auf- und Ab-Bewegung angeregt. Diese Bewegung wird durch das zweite Pleuelauge 43a, dass gegen den Kolben drehbar gelagert ist, in eine Auf- und Ab-Bewegung des Kolbens umgesetzt. Der Bereich, der das erste Pleuelauge 42a umschließt, ist mit dem Zeichen 44a bezeichnet. Sein maximaler Aktionsradius bei einer Bewegung um die Kurbelwelle bestimmt den Bewegungsraum 45a, den die erste Pleuelstange im Kurbelraum benötigt.

Analog weist die zweite Pleuelstange 41b ein erstes Pleuelauge 42b auf, mit dem sie an der Kurbelwelle gelagert ist. Mit ihrem zweiten Pleuelauge 43b ist sie am zweiten Kolben gelagert. Das Pleuelauge 42b wird von einem Bereich 44b umschlossen, dessen maximaler Aktionsradius den Bewegungsraum 45b bestimmt, den die Pleuelstange insgesamt innerhalb des Kurbelraums 31 benötigt. Der Bewegungsraum 45b der zweiten Pleuelstange 41b ist kleiner als der Bewegungsraum 45a der ersten Pleuelstange 41a. Dies trägt der Tatsache Rechnung, dass sich der Innendurchmesser des Kurbelraums 31 am Ort des Zylinderraums 32b gegenüber dem Ort des Zylinderraums 32a verjüngt hat.

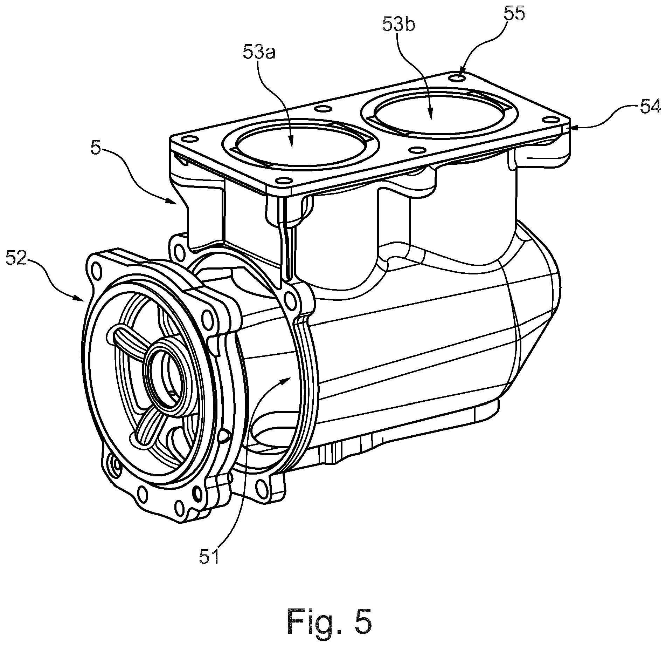

Figur 5 zeigt eine Außenansicht des fertigen erfindungsgemäßen Gehäuses 5. Auf die Öffnung 51, in die die Kurbelwelle eingeführt werden kann, ist ein Flansch 52 aufgesetzt. Wird das Gehäuse 5 in einem Kompressor verwendet, wird an diesem Flansch 52 der Antrieb angeschlossen. Wird das Gehäuse 5 dagegen in einem Motor verwendet, wird an den Flansch 52 der Abtrieb angeschlossen. Die Zylinderräume 53a und 53b befinden sich nur teilweise innerhalb des Gehäuses 5. Sie enden in einer Grundplatte 54 mit Befestigungsmitteln 55. An der Grundplatte 54 wird später der Zylinderkopf montiert. Die Kolben laufen nicht unmittelbar auf dem Aluminium der Zylinderräume 53a und 53b, sondern auf eingepressten Laufbuchsen, die getauscht werden können, wenn sie verschlissen sind.

Das Gehäuse lässt sich im Hochdruckgussverfahren fertigen, aber auch mit andern Aluminiumgussverfahren wie etwa Sandgießen oder Formgießen. Es muss auch nicht aus Aluminium gefertigt sein, sondern kann beispielweise auch aus Gusseisen gefertigt sein.

### Bezugszeichenliste

- 11, 12: Gehäuseteile
- 21, 22: Gehäuseteile
- 3: Gehäuse
- 31: Kurbelraum
- 31a, 31b: Enden des Kurbelraums 31
- 32a, 32b: Zylinderräume
- 33: Öffnung am Ende 31a des Kurbelraums 31
- 34: Formdorn
- 34a, 34b: Enden des Formdorns 34
- 41a, 41b: Pleuelstangen
- 42a, 42b: erstes Pleuelauge der Pleuelstangen 41a und 41b
- 43a, 43b: zweites Pleuelauge der Pleuelstangen 41a und 41b
- 44a, 44b: Bereich, der das erste Pleuelauge 42a bzw. 42b umschließt
- 45a, 45b: Bewegungsräume der Pleuelstangen 41a und 41b im Kurbelraum 31
- 5: Gehäuse
- 51: Öffnung des Gehäuses 5
- 52: Flansch
- 53a, 53b: Zylinderräume
- 54: Grundplatte
- 55: Befestigungsmittel

## Patentansprüche

1. Gehäuse (3, 5) für einen Motor oder Kompressor mit einem länglichen Kurbelraum (31), welcher zwei Endflächen (31a, 31b) aufweist, zur Aufnahme einer Kurbelwelle und mit mindestens einem Zylinderraum (32a, 32b, 53a, 53b) zur Aufnahme eines Kolbens, wobei der Kurbelraum (31) in einer ersten Endfläche (31a) eine Öffnung (33, 51) aufweist, durch die die Kurbelwelle in den Kurbelraum (31) einführbar ist, wobei ein Innendurchmesser des Kurbelraums (31) sich von der ersten Endfläche (31a) zur zweiten Endfläche (31b) monoton verjüngt,
**dadurch gekennzeichnet, dass** das Gehäuse (3,5) einstückig gegossen ist und dass der Kurbelraum (31) von der ersten Endfläche (31a) zur zweiten Endfläche (31b) in Form eines Kegels oder Kegelstumpfes zuläuft, derart, dass der Mantel des Kegels oder Kegelstumpfes gegen seine Symmetrieachse um einen Winkel zwischen 0,5 und 10 Grad geneigt ist.

2. Gehäuse (3,5) nach Anspruch 1, **dadurch gekennzeichnet, dass** es zumindest teilweise aus Aluminium, Magnesium, Titan oder einer Aluminium-, Magnesium- oder Titanlegierung besteht.

3. Motor oder Kompressor, umfassend
• ein Gehäuse (3, 5) nach einem der Ansprüche 1 bis 2 mit mindestens zwei Zylinderräumen (32a, 32b, 53a, 53b) zur Aufnahme je eines Kolbens;
• eine Kurbelwelle;
• je Zylinderraum eine Pleuelstange (41a, 41b), die mit einem ersten Pleuelauge (42a, 42b) an der Kurbelwelle und mit einem zweiten Pleuelauge (43a, 43b) an einem im Zylinderraum (32a, 32b, 53a, 53b) laufenden Kolben jeweils drehbar gelagert ist,
**dadurch gekennzeichnet, dass**
sich, im Vergleich zweier entlang der Achse der Kurbelwelle gelagerter Pleuelstangen (41a, 41b), mit dem jeweiligen Innendurchmesser des Kurbelraums (31) auch der Außendurchmesser der Pleuelstange (41a, 41b) im Bereich (44a, 44b) des ersten Pleuelauges (42a, 42b) und/oder der Innendurchmesser des ersten Pleuelauges (42a, 42b) verjüngt.

4. Motor oder Kompressor nach Anspruch 3, **dadurch gekennzeichnet, dass** die Kolben identische Durchmesser und/oder identische Hubwege aufweisen.

5. Motor oder Kompressor nach einem der Ansprüche 3 bis 4, **dadurch gekennzeichnet, dass** ein Flansch (52) auf der ersten Endfläche (31a) des Kurbelraums (31) angeordnet ist.

6. Motor oder Kompressor nach Anspruch 5, **dadurch gekennzeichnet, dass** die Kurbelwelle zur Verbindung mit dem Abtrieb bzw. Antrieb durch den Flansch (52) geführt ist.

7. Motor oder Kompressor nach einem der Ansprüche 5 bis 6, **dadurch gekennzeichnet, dass** der Flansch
• zur Befestigung des Motors oder Kompressors im Motorraum eines Fahrzeugs und/oder
• zur Befestigung eines weiteren, über die Kurbelwelle angetriebenen Aggregats am Motor oder Kompressor
ausgebildet ist.

8. Verfahren zur Herstellung eines Gehäuses (3, 5) nach einem der Ansprüche 1 bis 2, **dadurch gekennzeichnet, dass**
der Kurbelraum (31) durch Umgießen eines länglichen Formdorns (34), welcher zwei Enden (34a, 34b) aufweist und dessen Außendurchmesser sich von seinem ersten Ende (34a) zu seinem zweiten Ende (34b) hin monoton verjüngt, mit dem Gehäusewerkstoff gefertigt wird.

9. Verfahren nach Anspruch 8, **dadurch gekennzeichnet, dass** der Formdorn (34) nach dem Umgießen an seinem ersten Ende aus dem Gehäuse (3, 5) gezogen wird.

## Claims

1. Housing (3, 5) for a motor or compressor, having an elongate crank chamber (31), which has two end surfaces (31a, 31b), for accommodating a crankshaft and having at least one cylinder chamber (32a, 32b, 53a, 53b) for accommodating a piston, wherein the crank chamber (31) has, in a first end surface (31a), an opening (33, 51) through which the crankshaft can be inserted into the crank chamber (31),
wherein an inner diameter of the crank chamber (31) narrows monotonously from the first end surface (31a) to the second end surface (31b),
**characterized in that** the housing (3, 5) is cast in one piece and **in that** the crank chamber (31) tapers in the shape of a cone or frustum from the first end surface (31a) to the second end surface (31b) in such a way that the shell of the cone or frustum is inclined with respect to its axis of symmetry by an angle of between 0.5 and 10 degrees.

2. Housing (3, 5) according to Claim 1, **characterized in that** said housing is composed at least partially of aluminum, magnesium, titanium or an aluminum, magnesium or titanium alloy.

3. Motor or compressor, comprising
• a housing (3, 5) according to either of Claims 1 and 2 having at least two cylinder chambers (32a, 32b, 53a, 53b) for accommodating in each case one piston;
• a crankshaft;
• one connecting rod (41a, 41b) per cylinder chamber, which connecting rod is rotatably mounted by means of a first connecting-rod eye (42a, 42b) on the crankshaft and by means of a second connecting-rod eye (43a, 43b) on a piston which runs in the cylinder chamber (32a, 32b, 53a, 53b),
**characterized in that,**
in a comparison of two connecting rods (41a, 41b) mounted along the axis of the crankshaft, the outer diameter of the connecting rod (41a, 41b) in the region (44a, 44b) of the first connecting-rod eye (42a, 42b) and/or the inner diameter of the first connecting-rod eye (42a, 42b) also narrows with the respective inner diameter of the crank chamber (31).

4. Motor or compressor according to Claim 3, **characterized in that** the pistons have identical diameters and/or identical stroke travels.

5. Motor or compressor according to either of Claims 3 and 4, **characterized in that** a flange (52) is arranged on the first end surface (31a) of the crank chamber (31).

6. Motor or compressor according to Claim 5, **characterized in that** the crankshaft is led through the flange (52) for the purposes of connection to the output or drive.

7. Motor or compressor according to either of Claims 5 and 6, **characterized in that** the flange is designed
• for the fastening of the motor or compressor in the engine bay of a vehicle and/or
• for the fastening of a further assembly, which is driven by means of the crankshaft, to the motor or compressor.

8. Method for producing a housing (3, 5) according to either of Claims 1 and 2, **characterized in that**
the crank chamber (31) is manufactured by casting the housing material around an elongate shaping mandrel (34) which has two ends (34a, 34b) and the outer diameter of which narrows monotonously from its first end (34a) to its second end (34b).

9. Method according to Claim 8, **characterized in that**, after the casting-around process, the shaping mandrel (34) is pulled at its first end out of the housing (3, 5).

## Revendications

1. Carter (3, 5) de moteur ou de compresseur, comprenant un espace (31) oblong de vilebrequin, qui a deux surfaces (31a, 31b) d'extrémité, pour la réception d'un vilebrequin et comprenant au moins un espace (32a, 32b, 53a, 53b) de cylindre pour la réception d'un piston, l'espace (31) de vilebrequin ayant, dans une première surface (31a) d'extrémité, une ouverture (33, 51), par laquelle le vilebrequin peut être introduit dans l'espace (31) de vilebrequin, un diamètre intérieur de l'espace (31) de vilebrequin se rétrécissant de manière monotone de la première surface (31a) d'extrémité à la seconde surface (31b) d'extrémité,
**caractérisé en ce que** le carter (3, 5) est coulé d'une seule pièce et **en ce que** l'espace (31) de vilebrequin va, sous la forme d'un cône ou d'un tronc de cône de la première surface (31) d'extrémité à la seconde surface (31b) d'extrémité, de manière à ce que l'enveloppe du cône ou du tronc de cône soit, par rapport à son axe de symétrie, inclinée d'un angle compris entre 0,5 et 10 degrés.

2. Carter (3, 5) suivant la revendication 1, **caractérisé en ce qu'**il est, au moins en partie, en aluminium, en magnésium, en titane ou en un alliage d'aluminium, de magnésium ou de titane.

3. Moteur ou compresseur comprenant
• un carter (3, 5) suivant l'une des revendications 1 à 2, ayant au moins deux espaces (32a, 32b, 53a, 53b) de cylindre de réception chacun d'un piston ;
• un vilebrequin ;
• par espace de cylindre, une tige (41a, 41b) de bielle, qui est montée tournante, respectivement, par un premier oeil (42a, 42b) de bielle sur le vilebrequin et par un deuxième oeil (43a, 43b) de bielle sur un piston passant dans l'espace (32a, 32b, 53a, 53b) de cylindre,
**caractérisé en ce que**,
par rapport à deux tiges (41a, 41b) de bielle, montées suivant l'axe du vilebrequin, avec le diamètre intérieur respectif de l'espace (31) du vilebrequin se rétrécit également le diamètre extérieur de la tige (41a, 41b) de bielle, dans la partie (44a, 44b) du premier oeil (42a, 42b) de bielle et/ou le diamètre intérieur du premier oeil (42a, 42b) de bielle.

4. Moteur ou compresseur suivant la revendication 3, **caractérisé en ce que** les pistons ont les mêmes diamètres et/ou les mêmes courses.

5. Moteur ou compresseur suivant l'une des revendications 3 à 4, **caractérisé en ce qu'**une bride (52) est montée sur la première surface (31a) d'extrémité de l'espace (31) de vilebrequin.

6. Moteur ou compresseur suivant la revendication 5, **caractérisé en ce que** le vilebrequin est, pour la liaison avec la sortie ou l'entrée, guidé par la bride (52).

7. Moteur ou compresseur suivant l'une des revendications 5 à 6, **caractérisé en ce que** la bride est constituée
• pour la fixation du moteur ou de compresseur dans l'espace moteur d'un véhicule et/ou
• pour la fixation au moteur ou au compresseur d'un autre groupe entraîné par le vilebrequin.

8. Procédé de fabrication d'un carter (3, 5) suivant l'une des revendications 1 à 2, **caractérisé en ce que** on fabrique, en le matériau de carter, l'espace (31) de vilebrequin, par coulée d'un mandrin (34) oblong de moulage, qui a deux extrémités (34a, 34b) et dont le diamètre extérieur se rétrécit de façon monotone de sa première extrémité (34a) à sa seconde extrémité (34b).

9. Procédé suivant la revendication 8, **caractérisé en ce que** l'on retire du carter (3, 5), à sa première extrémité, le mandrin (34) de moulage après la coulée.
